# EUROPÄISCHE PATENTSCHRIFT

(11) **EP 1 123 847 B1**
(45) Veröffentlichungstag und Bekanntmachung des Hinweises auf die Patenterteilung: **23.06.2004**
(21) Anmeldenummer: 01102454.4
(22) Anmeldetag: 03.02.2001
(51) Int. Cl.: B60T 10/02

(54) **Vorrichtung zur Reduzierung der Ansprechzeit bei hydrodynamischen Bremsen**
Device for reducing hydrodynamic retarder response time
Dispositif de réduction du temps de réponse d'un ralentisseur hydrodynamique

(30) Priorität: 11.02.2000 DE 10006019
(43) Veröffentlichungstag der Anmeldung: 16.08.2001
(73) Patentinhaber: ZF FRIEDRICHSHAFEN Aktiengesellschaft, 88038 Friedrichshafen (DE)
(72) Erfinder: Grupp, Bernhard, Dipl.-Ing., 88250 Weingarten (DE); Reisch, Bernhard, Dipl.-Ing., 88316 Isny (DE); Sauter, Frank, Dipl.-Ing., 88074 Meckenbeuren (DE)

(56) Entgegenhaltungen:
- WO-A-95/01500
- DE-A- 2 855 654
- DE-A- 19 637 316
- DE-C- 19 750 675

## Beschreibung

Die Erfindung betrifft eine Vorrichtung zur Reduzierung der Ansprechzeit bei hydrodynamischen Bremsen nach dem Oberbegriff von Anspruch 1. Das Dokument DE-A-19637316 offenbart alle Merkmale des Oberbegriffs des Anspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen, wie Retarder und Motorbremsen, können dazu verwendet werden, die Fahrzeuggeschwindigkeit im Gefälle konstant zu halten.
Zu den Retardern werden sowohl zusätzlich am Getriebe angeordnete hydrodynamische, hydrostatische oder elektrodynamische Bremseinrichtungen verstanden, als auch solche Systeme, die in Form eines "Intarders" innerhalb des Getriebegehäuses vorgesehen sind.
Retarder werden des weiteren unterschieden in Primärretarder, die in Abhängigkeit von der Motordrehzahl arbeiten, und in Sekundärretarder, die in Abhängigkeit von der Fahrzeuggeschwindigkeit arbeiten.

Die hydrodynamischen Retarder weisen einen pneumatisch beaufschlagten Speicher auf, welcher bei Bremsbeginn seinen Inhalt in den Retarderkreislauf presst. Eine Hydraulikpumpe stellt den Retarderinnendruck sicher und gleicht mögliche Leckagen aus. Um möglichst minimale Verluste zu haben, wird diese Pumpe derart konzipiert, daß lediglich das Druckniveau gehalten wird jedoch nicht in ausreichender Zeit der Retarder befüllt werden kann. Mit der Konzeption mit Speicher ergibt sich kein optimales Ansprechverhalten, dargestellt als Funktion des Speicherfüllungsgrades.

Der Erfindung liegt die Aufgabe zugrunde, einen Kreislauf für eine hydrodynamische Bremse aufzuzeigen, der die Ansprechzeit der Bremse verbessert.

Die Aufgabe wird gelöst durch eine Vorrichtung mit den Merkmalen des Anspruchs 1. Ausgestaltungen sind Gegenstand von Unteransprüchen.

Erfindungsgemäß weist ein Kreislauf einer hydrodynamischen Bremseinrichtung eine Vorrichtung zur Reduzierung der Ansprechzeit der Bremseinrichtung mit einem in dem Kreislauf geförderten Medium auf, das im Bremsbetrieb zwischen einen Rotor und einen Stator der Bremseinrichtung gepresst wird. Von einer zuschaltbaren Pumpe wird das Medium im Bremsbetrieb ohne zusätzliche Verwendung eines Speichers unmittelbar in den von Rotor und Stator gebildeten Arbeitsraum gepumpt. In einer vorteilhaften Ausgestaltung wird der Hydraulikkreislauf mit einer zweiten Pumpe zur Befüllung des Kreislaufs versehen. Eine Ausgestaltung zeigt eine zweite Pumpe, die über eine Kupplung der ersten Pumpe zuschaltbar ist. Bei Bedarf, also im Bremsbetrieb, wird die zweite Pumpe beispielsweise über eine Lamellen- oder Konuskupplung zugeschaltet. Die Ansteuerung der Kupplung kann pneumatisch, hydraulisch oder elektrisch, beispielsweise als Magnetkupplung, erfolgen. Durch diese Ausgestaltung lassen sich vorteilhaft reproduzierbare Ansprechzeiten erreichen, da die Ansprechzeit der Bremseinrichtung nicht mehr vom Füllgrad einer Speichers bei der Zwischenspeicherung abhängig ist. Gegenüber einer permanent angetriebenen zweiten Pumpe werden durch die Zuschaltbarkeit geringere zusätzliche Leerlaufverluste produziert.

Die zweite Pumpe läuft in einer vorteilhaften Ausführungsform außerhalb des Bremsbetriebes drucklos mit und ist während des Bremsbetriebes über ein Bypassventil zuschaltbar. Dabei werden beide Pumpen gemeinsam, beispielsweise auf einer gemeinsamen Welle, ohne dazwischenliegende mechanische Kupplung angetrieben. Die erste Pumpe deckt auch den Grundbedarf des Systems ab, bestehend aus Umlaufvolumenstrom für Getriebekühlung mit Leerlaufsystemdruck. Die zweite Pumpe fördert ihren Volumenstrom über das Bypassventil und nicht über den Wärmetauscher in den Saugkanal zurück. Dabei entstehen keine wesentlichen Druckverluste. Im Bremsbetrieb wird das Bypassventil hydraulisch, pneumatisch oder elektrisch so geschaltet, daß der Volumentstrom der zweiten Pumpe in die Bremseinrichtung mit eingespeist wird. Hierdurch ergeben sich vorteilhaft geringe Leerlaufverluste und eine kostengünstigere Lösung als in einem System mit Speicher. Es lassen sich ausreichend dimensionierte Ölkanäle darstellen mit ausreichend großen Volumenströmen für eine gute Getriebekühlung.

In einer weiteren vorteilhaften Ausgestaltung wird die eine Pumpe im Kreislauf gegenüber bestehenden Systemen vergrößert ausgebildet und ist über eine Kupplung zuschaltbar. Eine Ausführung weist diese Kupplung als eine Schlupfkupplung aus. Die Kupplung ist so dimensioniert bzw. über eine Feder so eingestellt, daß das Schlupfmoment bzw. Leerlaufschlupfmoment ausreicht, um die Pumpe beim Leerlaufsystemdruck und kleinen Drehzahlen zu betreiben. Da die Momentenkennlinie der Pumpe über der Drehzahl steiler verläuft als die Momentenkennlinie der Kupplung, stellt sich selbständig eine Maximaldrehzahl der Pumpe ein. Mit zunehmender Gelenkwellendrehzahl und damit steigender Fahrzeuggeschwindigkeit weist die Schlupfkupplung einen steigenden Schlupf auf. Im Bremsbetrieb wird die Kupplung dann hydraulisch oder elektromagnetisch zugeschaltet. Durch diese Anordnung wird das Leerlaufmoment auf das Schleppmoment der Kupplung beschränkt. Im bremsfreien Betrieb stellt sich über einen großen Drehzahlbereich ein konstanter Volumenstrom im Kreislauf zur Getriebekühlung ein.

In einer Ausgestaltungsform wird die Pumpe über die Schlupfkupplung bei einer steigenden Fahrzeuggeschwindigkeit bis zu einem definierten Schlupf und einem definierten Druck und Volumenstrom angetrieben und bei weiter ansteigender Fahrzeuggeschwindigkeit auf diesem Druck und Volumenstrom gehalten. Im Stillstand des Fahrzeuges, also bei Nulldrehzahl der Gelenkwelle bzw. der Pumpe, ist die Kupplung über eine Feder geschlossen. Sobald die Pumpe einen definierten Volumenstrom bzw. Druck erreicht, wird beispielsweise über einen Kolben die Schließfeder der Kupplung so entlastet, daß sich ein definierter Schlupf einstellt. Die Kupplung regelt somit über die Pumpe einen definierten Volumenstrom und/oder Druck. Dieses Verhalten wird durch ein Druckbegrenzungsventil erreicht, das in seiner geschlossenen Position einen definierten Öffnungsspalt besitzt und somit einen Mindestvolumenstrom zuläßt. Durch diese Anordnung werden Fertigungstoleranzen der Kupplung im Schlupf eliminiert. Ein Stillstehen der Pumpe, wie dies bei kaltem Öl oder bei Pumpenklemmen auftreten könnte, wird verhindert.

Der Erfindung wird anhand einer Zeichnung näher erläutert.
Es zeigen:
- Fig. 1: eine Anordnung mit zwei Pumpen und Kupplung;
- Fig. 2: eine Anordnung mit zwei Pumpen und Bypassventil;
- Fig. 3: eine Anordnung mit einer Pumpe und Schlupfkupplung und
- Fig. 4: eine Anordnung nach Fig. 3 und Druckbegrenzungsventil.

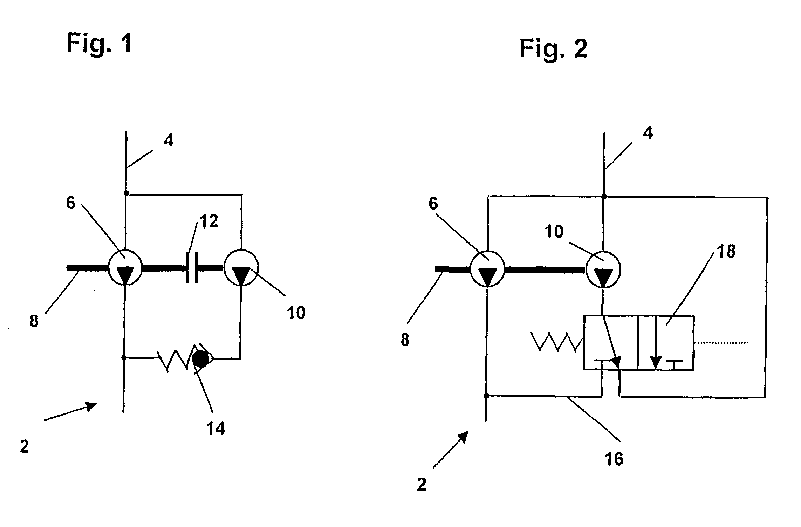

Die Fig. 1 zeigt einen Ausschnitt aus einem hydraulischen Kreislauf 2 eines hier nicht gezeigten Retarders mit einem Saugkanal 4, der zu einer ersten Pumpe 6 und zu einer zweiten Pumpe 10 führt. Die erste Pumpe 6 wird von einer Welle 8 angetrieben, über die auch die zweite Pumpe 10 antreibbar ist, wenn eine zwischen der ersten Pumpe 6 und der zweiten Pumpe 10 auf der Welle 8 angeordnete Kupplung 12 geschlossen ist. Die Kupplung 12 ist im Bremsbetrieb schließbar und fördert dann über ein Rückschlagventil 14 in den Hydraulikkreislauf 2 des Retarders. Ein Speicher ist im Hydraulikkreislauf 2 nicht mehr vorgesehen.

Die Fig. 2 zeigt einen Ausschnitt aus einem hydraulischen Kreislauf 2 eines Retarders mit einem Saugkanal 4, der zu einer ersten Pumpe 6 und zu einer zweiten Pumpe 10 führt. Die erste Pumpe 6 wird von einer Welle 8 angetrieben, über die auch die zweite Pumpe 10 angetrieben wird. Die zweite Pumpe 10 fördert in einen Ölkanal 16, in dem ein Bypassventil 18 angeordnet ist. Die Fig. 2 zeigt den Nicht-Bremsbetrieb, in dem die zweite Pumpe 10 über das Bypassventil 18 in den Saugkanal 4 nahezu verlustfrei zurückfördert. Im Bremsbetrieb wird das Bypassverntil 18 umgeschaltet und dann fördert die zweite Pumpe 10 über den Ölkanal 16 in den Hydraulikkreislauf 2 des Retarders.

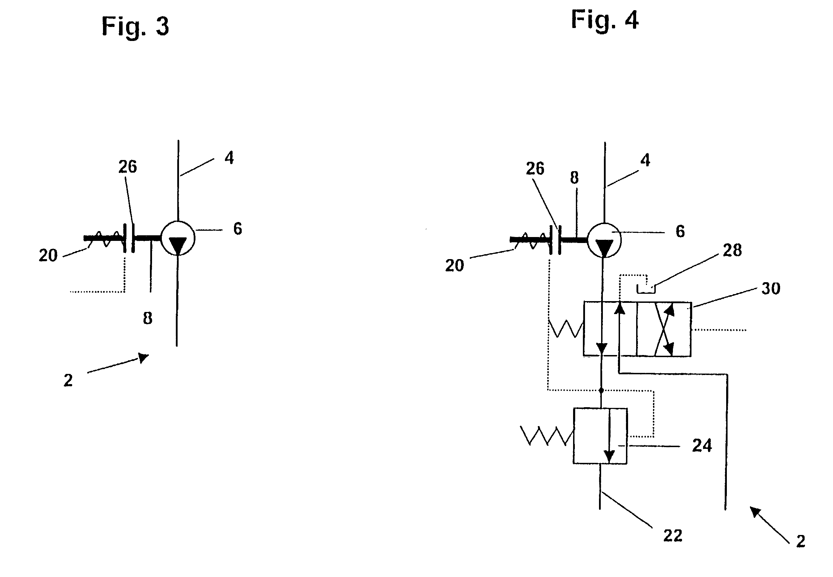

Die Fig. 3 zeigt einen Ausschnitt aus einem hydraulischen Kreislauf 2 eines Retarders mit einem Saugkanal 4, der zu einer Pumpe 6 führt. Die Pumpe 6 wird von einer Welle 8 angetrieben, wenn eine auf der Welle 8 angeordnete Kupplung 26 geschlossen ist. Die Kupplung 26 ist als eine Schlupfkupplung ausgestaltet, die von einer Feder 20 im Leerlauf in einem geschlossenen Zustand gehalten wird. Mit zunehmender Fahrzeuggeschwindigkeit und damit zunehmender Umdrehungsgeschwindigkeit der Welle 8 öffnet die Kupplung 26 gegen den Druck der Feder 20 und schlupft.

Die Fig. 4 zeigt einen Ausschnitt aus einem hydraulischen Kreislauf 2 eines Retarders mit einem Saugkanal 4, der zu einer Pumpe 6 führt. Die Pumpe 6 wird von einer Welle 8 angetrieben, wenn eine auf der Welle 8 angeordnete Kupplung 26 geschlossen ist. Die Kupplung 26 ist als eine Schlupfkupplung ausgestaltet, die von einer Feder 20 im Leerlauf in einem geschlossenen Zustand gehalten wird. In den Ölkanal 22 ist ein Druckbegrenzungsventil 24 eingesetzt, das in der Fig. 4 in einer geschlossenen Stellung gezeigt ist, in der es einen definierten Öffnungsspalt besitzt zum Zulassen eines Mindestvolumenstroms. Mit zunehmender Fahrzeuggeschwindigkeit und damit zunehmender Umdrehungsgeschwindigkeit der Welle 8 steigt der Volumenstrom der Pumpe 6 durch das drosselnd wirkende Druckbegrenzungsventil 24 an und entlastet die Schließkraft der Feder 20.
Im Bremsbetrieb ist das Druckbegrenzungsventil 24 funktionslos und der geförderte Ölstrom steht dem Hydraulikkreislauf 2 des Retarders zur Verfügung. Dazu wird im Bremsbetrieb das Ventil 28 geschaltet und somit das Druckbegrenzungsventil 24 in den Pumpe 30 entlastet. Folglich schließt die Kupplung 26 durch die Federkraft der Feder 20.

### Bezugszeichen

- 2: Hydraulikkreislauf
- 4: Saugkanal
- 6: erste Pumpe
- 10: zweite Pumpe
- 12: Kupplung
- 14: Rückschlagventil
- 16: Ölkanal
- 18: Bypassventil
- 20: Feder
- 22: Ölkanal
- 24: Druckbegrenzungsventil
- 26: Kupplung
- 28: Ventil
- 30: Sumpf

## Patentansprüche

1. Vorrichtung zur Reduzierung der Ansprechzeit einer hydrodynamischen Bremseinrichtung mit einem Kreislauf (2) für ein Medium, das im Bremsbetrieb in einen Arbeitsraum zwischen einen Rotor und einen Stator der Bremseinrichtung gefördert wird und mit wenigstens einer Pumpe (6, 10), die das Medium im Bremsbetrieb ohne Zwischenspeicherung unmittelbar in den Arbeitsraum pumpt, **dadurch gekennzeichnet, dass** die Vorrichtung wenigstens eine Pumpe (6, 10) aufweist, die im Bremsbetrieb zur Förderung des Mediums in den Arbeitsraum zuschaltbar ausgebildet ist.

2. Vorrichtung nach Anspruch 1, **dadurch gekennzeichnet, dass** die Pumpe (6, 10) über eine Kupplung (26) zuschaltbar ist.

3. Vorrichtung nach Anspruch 2, **dadurch ge-kennzeichnet, dass** die Kupplung (26) eine Schlupfkupplung ist.

4. Vorrichtung nach Anspruch 3, **dadurch gekennzeichnet, dass** die Schlupfkupplung (26) mit einer steigenden Fahrzeuggeschwindigkeit einen steigenden Schlupf aufweist.

5. Vorrichtung nach Anspruch 3 oder 4, **dadurch gekennzeichnet, dass** die Schlupfkupplung (26) bei einer steigenden Fahrzeuggeschwindigkeit bis zu einem definierten Schlupf und einem definierten Druck und Volumenstrom die Pumpe (6) antreibt und bei weiter ansteigender Fahrzeuggeschwindigkeit auf diesem definierten Druck und Volumenstrom hält.

6. Vorrichtung nach einem der Ansprüche 1 bis 5, **dadurch gekennzeichnet, dass** eine zweite Pumpe (10) zur Förderung des Mediums in den Kreislauf (2) vorgesehen ist.

7. Vorrichtung nach Anspruch 6, **dadurch gekennzeichnet, dass** die zweite Pumpe (10) die im Bremsbetrieb zuschaltbare Pumpe ist.

8. Vorrichtung nach Anspruch 6 oder 7, **dadurch gekennzeichnet, dass** die zweite Pumpe (10) außerhalb des Bremsbetriebes drucklos läuft und während des Bremsbetriebes über ein Bypassventil (18) zuschaltbar ist.

## Claims

1. Device for reducing the response time of hydrodynamic braking equipment featuring a circuit (2) for a medium which in the braking mode is carried to a working chamber between a rotor and a stator of the braking equipment and featuring at least one pump (6, 10) pumping the medium in the braking mode without intermediate storage direct to the working chamber, **characterized in that** the device features at least one pump (6, 10) that can be activated during the braking mode to pump the medium into the working chamber.

2. Device according to claim 1, **characterized in that** the pump (6, 10) can be activated via a clutch (26).

3. Device according to claim 2, **characterized in that** the clutch (26) is a slip clutch.

4. Device according to claim 3, **characterized in that** the slip of the slip clutch (26) increases with increasing vehicle speed.

5. Device according to claim 3 or 4, **characterized in that** with increasing vehicle speed the slip clutch (26) drives the pump (6) until defined slip, pressure and volume-flow levels are reached and maintains such defined pressure and volume flow with further increasing vehicle speed.

6. Device according to one of the claims 1 through 5, **characterized in that** a second pump (10) is provided for carrying the medium to the circuit (2).

7. Device according to claim 6, **characterized in that** the second pump (10) is the pump that can be activated in the braking mode.

8. Device according to claim 6 or 7, **characterized in that** the second pump (10) is unpressurized while the braking mode is not active and can be activated via a bypass valve (18) while the braking mode is active.

## Revendications

1. Dispositif de réduction du temps de réaction d'un système de freinage hydrodynamique avec un circuit (2) pour un fluide refoulé lors du freinage dans un espace de travail entre un rotor et un stator du système de freinage et avec au moins une pompe (6, 10), qui pompe le fluide lors du freinage directement dans l'espace de travail sans réservoir intermédiaire, **caractérisé en ce que** le dispositif comporte au moins une pompe (6, 10) configurée de manière à pouvoir être mise en circuit pour refouler le fluide dans l'espace de travail lors du freinage.

2. Dispositif selon la revendication 1, **caractérisé en ce que** la pompe (6, 10) peut être mise en circuit au moyen d'un accouplement (26).

3. Dispositif selon la revendication 2, **caractérisé en ce que** l'accouplement (26) est un accouplement à induction.

4. Dispositif selon la revendication 3, **caractérisé en ce que** l'accouplement à induction (26) présente un glissement croissant avec l'augmentation de la vitesse du véhicule.

5. Dispositif selon la revendication 3 ou 4, **caractérisé en ce que** l'accouplement à induction (26) entraîne la pompe (6), lors de l'augmentation de la vitesse du véhicule, jusqu'à un glissement à une pression et un débit volumétrique définis et la maintient à cette pression et ce débit volumétrique définis lorsque la vitesse continue à augmenter.

6. Dispositif selon l'une des revendications 1 à 5, **caractérisé en ce qu'**une seconde pompe (10) est prévue pour le refoulement du fluide dans le circuit (2).

7. Dispositif selon la revendication 6, **caractérisé en ce que** la seconde pompe (10) est la pompe pouvant être mise en circuit lors du freinage.

8. Dispositif selon la revendication 6 ou 7, **caractérisé en ce que** la seconde pompe (10) fonctionne de manière détendue hors du freinage et peut être mise en circuit lors du freinage au moyen d'une soupape de dérivation (18).
